# FASCICULE DE BREVET EUROPEEN

(11) **EP 4 001 551 B1**
(45) Date de publication et mention de la délivrance du brevet: **12.02.2025**
(21) Numéro de dépôt: 21208662.3
(22) Date de dépôt: 17.11.2021
(51) Int. Cl.: E04H 12/22, E04H 17/22, A01K 3/00

(54) **SYSTÈME DE POTEAU MUNI D'UN FOURREAU DE PROTECTION**
PFAHLSYSTEM, DAS MIT EINER SCHUTZHÜLLE AUSGESTATTET IST
POST SYSTEM PROVIDED WITH A PROTECTIVE SHEATH

(30) Priorité: 18.11.2020 FR 2011810
(43) Date de publication de la demande: 25.05.2022
(73) Titulaire: COSNET, 72550 Coulans-Sur-Gée (FR)
(72) Inventeur: COSNET, Gilbert, 72550 Coulans-Sur-Gée (FR)
(74) Mandataire: Jacobacci Coralis Harle

(56) Documents cités:
- DE-U1- 20 016 365
- DE-U1- 202006 015 706
- DE-U1- 202014 102 748
- FR-A1- 3 092 601

## Description

### Domaine technique de l'invention

La présente invention concerne un système de poteau muni d'un fourreau de protection, en particulier pour la réalisation de clôtures dans le domaine de l'agriculture.

Les systèmes de poteaux de ce genre sont notamment utilisés dans le domaine de l'élevage d'animaux pour constituer des supports de barrière permettant la réalisation d'enclos qui servent à délimiter des espaces de parcage pour les animaux.

### Etat de la technique

Les espaces de parcage correspondants sont généralement recouverts d'une couche de paille sur 20 à 40 cm d'épaisseur formant une litière pour améliorer le confort des animaux.

Cependant cette litière se transforme assez rapidement en fumier sous l'effet de son mélange avec les déjections animales, générant des jus de fumier très corrosifs et des couplages électrochimiques (ou effet de pile), aboutissant à la dégradation accélérée des pièces métalliques en contact avec le sol.

C'est pourquoi certains systèmes de poteaux utilisés pour la réalisation des enclos de parcage comprennent un poteau (généralement métallique) dont la partie inférieure est protégée de l'humidité et de la corrosion par un fourreau en matière plastique.

Les systèmes de poteaux en question peuvent être démontables pour permettre leur enlèvement en vue de faciliter le nettoyage de la surface du sol.

Dans ce cas il est connu de noyer dans le sol une douille de guidage de poteau, dont l'extrémité supérieure affleure le sol, et qui est adaptée pour réceptionner la base du poteau de manière amovible.

Des systèmes de poteaux de ce genre sont connus par exemple des documents FR-2 934 294 ou encore FR-3 092 601, dans lesquels la protection du poteau métallique est obtenue par emboitement de la base d'un fourreau supérieur dans ou sur la partie supérieure d'une douille de guidage de poteau implantée dans le sol.

Cependant les dispositifs de protection de tels systèmes de poteaux n'ont pas une efficacité optimale. L'humidité du sol ou les jus de fumier peuvent malgré tout atteindre la base des poteaux par les lignes d'emboitement des deux parties de la protection ; et le matériau constitutif des poteaux a la possibilité d'être atteint et agressé par cette ambiance humide et acide, et par effet d'électrolyse (pour les poteaux métalliques). Le document DE20016365U divulgue un système de poteau qui comprend les caractéristiques du préambule de la revendication 1.

### Présentation de l'invention

Afin de remédier à l'inconvénient précité de l'état de la technique, la présente invention propose un système de poteau destiné à être installé dans un sol, lequel système de poteau comprend :
- un poteau de forme générale allongée, délimité par une extrémité inférieure de poteau, une extrémité supérieure de poteau et un corps de poteau entre les deux, lequel corps de poteau comprend une partie inférieure de poteau destinée à se situer au-dessous du niveau de la surface du sol, une partie supérieure de poteau destinée à se situer au-dessus du niveau de la surface du sol, et une surface externe de corps de poteau, et
- un fourreau de protection qui recouvre une partie dudit corps de poteau depuis ladite extrémité inférieure de poteau, lequel fourreau de protection comprend un axe longitudinal de fourreau et une extrémité munie d'une ouverture formant embouchure de fourreau. Ledit fourreau de protection est réalisé monobloc en matière plastique et comprend :
   - une partie inférieure de fourreau qui recouvre ladite partie inférieure de poteau,
   - une partie supérieure de fourreau qui recouvre un tronçon inférieur de ladite partie supérieure de poteau, le système de poteau étant caractérise par le fait que le fourreau de protection comprend aussi un fond de fourreau qui ferme de manière étanche ladite partie inférieure de fourreau du côté de ladite extrémité inférieure de poteau.

Un tel fourreau de protection constitue une sorte de coque étanche qui protège efficacement la partie du poteau susceptible d'être agressée par l'humidité du sol, les jus de fumier et par effet d'électrolyse.

D'autres caractéristiques non limitatives et avantageuses du système de poteau conforme à l'invention, prises individuellement ou selon toutes les combinaisons techniquement possibles, sont les suivantes :
- le fourreau de protection comprend une collerette circulaire monobloc, qui s'étend en saillie autour de la zone de jonction entre la partie inférieure de fourreau et la partie supérieure de fourreau, laquelle collerette circulaire comprend une face annulaire d'appui, qui s'étend perpendiculairement audit axe longitudinal de fourreau ;
- le système de poteau comprend un espace annulaire entre le fourreau de protection et la surface externe de corps de poteau, au niveau de ladite embouchure de fourreau ; et il comprend encore un joint annulaire rapporté, en un matériau souple ou semi-rigide, inséré dans ledit espace annulaire ;
- ledit joint annulaire comprend (a) un corps de joint tubulaire adapté pour venir se positionner dans ledit espace annulaire entre le fourreau de protection et la surface externe de corps de poteau, et (b) une extension supérieure annulaire comprenant un épaulement destiné à venir prendre appui contre une bordure d'extrémité supérieure du fourreau de protection ;
- ladite partie inférieure de fourreau et un tronçon inférieur de ladite partie supérieure de fourreau comprennent une face intérieure en contact avec la surface externe de corps de poteau ou espacée de la surface externe de corps de poteau par un simple jeu fonctionnel, et ladite partie supérieure de fourreau comprend un tronçon supérieur évasé pour former ledit espace annulaire de réception du joint annulaire ;
- la surface externe de la partie inférieure de fourreau comprend des nervures en saillie qui s'étendent parallèlement à l'axe longitudinal de fourreau ;
- le poteau est de section circulaire, et le système de poteau comprend des moyens anti-rotation pour empêcher la rotation du poteau par rapport au fourreau de protection, lesquels moyens anti-rotation comprennent un ergot anti-rotation en saillie ménagé sur ledit corps de poteau, coopérant avec un logement d'accueil ménagé au niveau de l'extrémité supérieure de ladite partie inférieure de fourreau, lequel fourreau de protection comprend encore une gorge longitudinale ménagée entre ledit logement d'accueil et ladite embouchure de fourreau adaptée au passage dudit ergot anti-rotation ;
- le système de poteau comprend une douille de guidage de poteau de forme générale tubulaire, comprenant un axe longitudinal de douille et un corps de douille dont une extrémité supérieure de douille est munie d'une ouverture formant embouchure de douille, et dont une extrémité inférieure de douille comprend un fond de douille monobloc qui ferme ladite extrémité inférieure de douille de manière étanche,
   laquelle douille de guidage de poteau est destinée à être implantée dans ledit sol, avec ladite embouchure de douille affleurant ladite surface de sol,
   et laquelle douille de guidage de poteau est destinée à recevoir ladite partie inférieure de poteau recouverte de ladite partie inférieure de fourreau, la section intérieure de ladite douille de guidage de poteau correspondant, au jeu près, à la section extérieure de ladite partie inférieure de fourreau ;
- la surface externe du corps de douille comprend des nervures en saillie dont certaines s'étendent parallèlement audit axe longitudinal de douille, et dont certaines s'étendent perpendiculairement audit axe longitudinal de douille ;
- le système de poteau comprend des moyens anti-rotation pour empêcher la rotation du fourreau de protection par rapport à la douille de guidage de poteau ;
- lesdits moyens anti-rotation pour empêcher la rotation du fourreau de protection par rapport à la douille de guidage de poteau consistent en au moins un bossage anti-rotation ménagé au niveau de l'extrémité supérieure de la partie inférieure de fourreau, adapté pour coopérer avec une réservation anti-rotation complémentaire ménagée au niveau de ladite extrémité supérieure de douille ;
- le système de poteau comprend quatre bossages anti-rotation espacés de 90° sur le pourtour du fourreau de protection et/ou quatre réservations anti-rotation espacées de 90° sur le pourtour de la douille de guidage de poteau ;
- le ou l'un desdits bossages anti-rotation constitue le logement d'accueil de l'ergot anti-rotation du poteau.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue en perspective éclatée d'une forme de réalisation possible d'un système de poteau conforme à l'invention ;
[Fig. 2] est une vue en perspective du système de poteau de la figure 1, monté et implanté dans un sol ;
[Fig. 3] est une vue de côté du système de poteau de la figure 2 ;
[Fig. 4] est une vue en coupe de la partie inférieure du système de poteau des figures 1 à 3, implanté dans un sol, selon le plan de coupe B-B de la figure 3 ;
[Fig. 5] est une vue de côté du fourreau de protection du système de poteau illustré sur les figures 1 à 4 ;
[Fig. 6] est une vue en coupe du fourreau de protection, selon le plan de coupe C-C de la figure 5 ;
[Fig. 7] est une vue en coupe du fourreau de protection selon le plan de coupe D-D de la figure 5 ;
[Fig. 8] est une vue en coupe du fourreau de protection selon le plan de coupe E-E de la figure 5 ;
[Fig. 9] est une vue en perspective du joint annulaire du système de poteau illustré sur les figures 1 à 4 ; ;
[Fig. 10] est une vue de dessous du joint annulaire illustré sur la figure 9 ;
[Fig. 11] est une vue en coupe du joint annulaire selon le plan de coupe A-A de la figure 10 ;
[Fig. 12] est une vue de côté de la douille de guidage de poteau du système de poteau illustré sur les figures 1 à 4 ; ;
[Fig. 13] est une vue en coupe de la douille de guidage de poteau selon le plan de coupe F-F de la figure 12 ;
[Fig. 14] est une vue en coupe de la douille de guidage de poteau selon le plan de coupe G-G de la figure 12 ;
[Fig. 15] est une vue en perspective éclatée d'une variante de réalisation du système de poteau conforme à l'invention.

Il est à noter que, sur ces figures, les éléments structurels et/ou fonctionnels communs aux différentes variantes peuvent présenter les mêmes références.

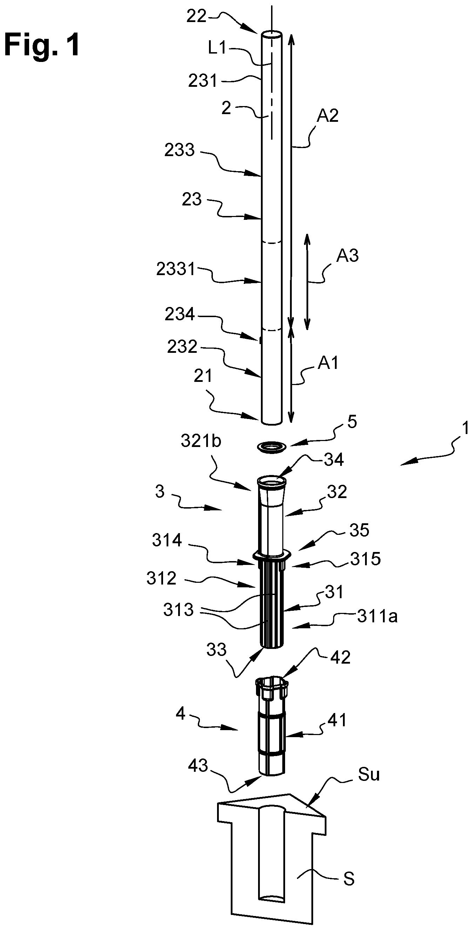

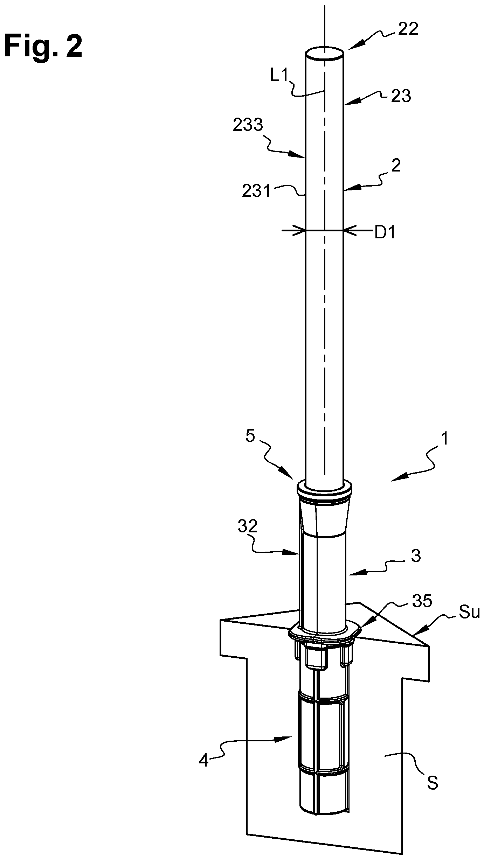

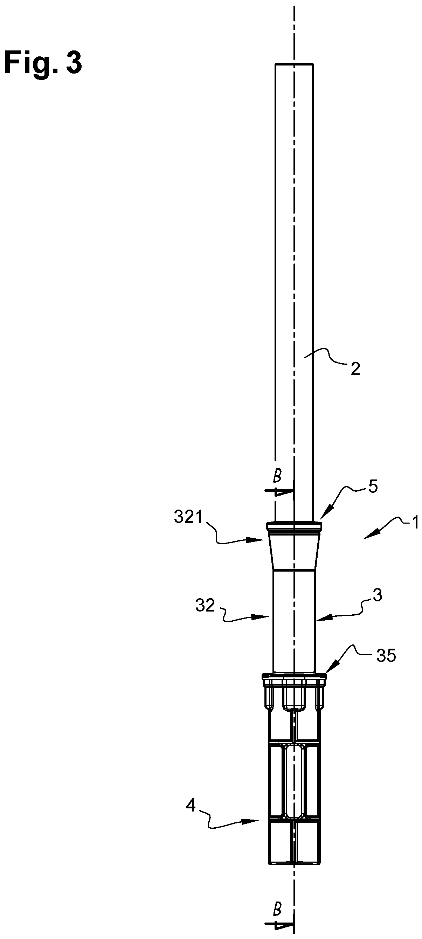

Les figures 1 à 14 détaillent une forme de réalisation possible d'un système de poteau 1 conforme à l'invention, destiné à être installé dans un sol S.

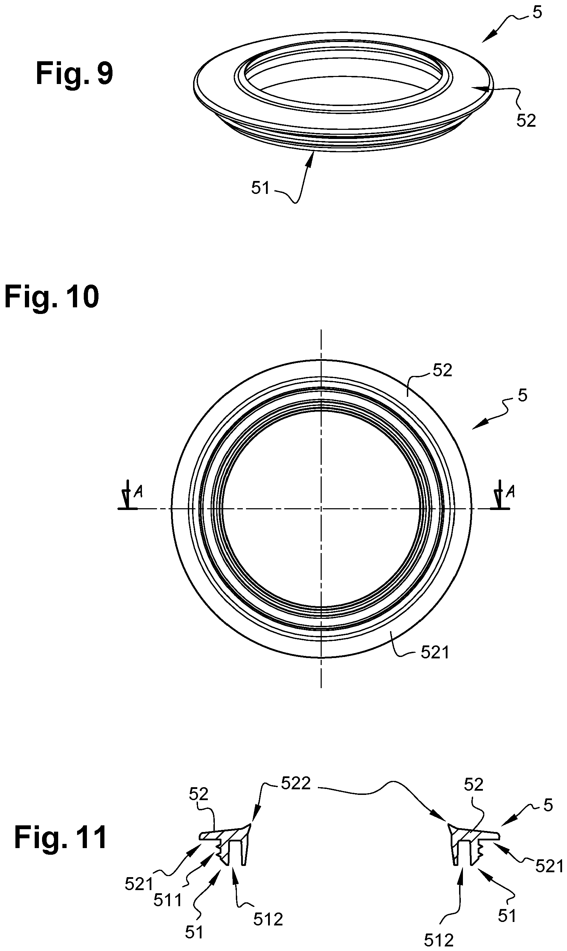

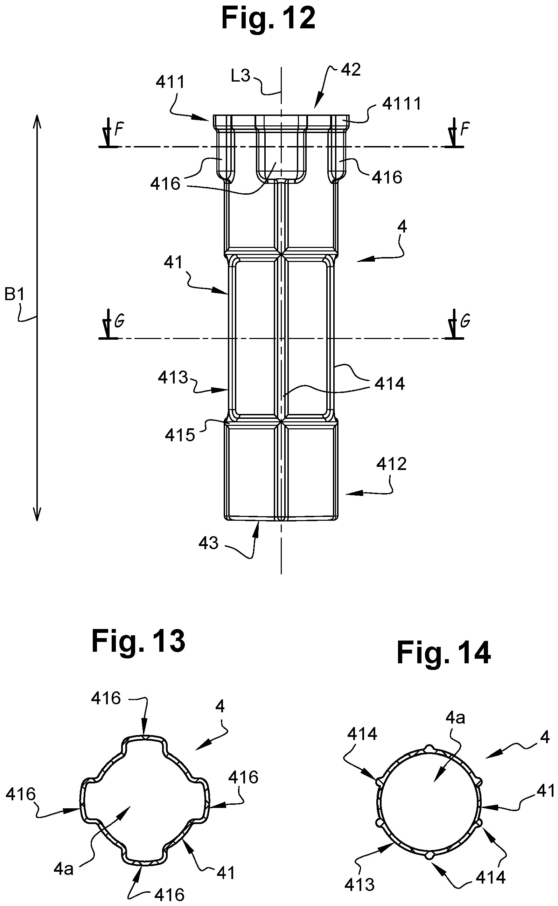

Comme on peut le voir sur les figures 1 à 4 ;, le système de poteau 1 comprend - un poteau 2 de forme générale allongée, - un fourreau de protection 3 (représenté isolément sur lesfigures 5 à 8) qui recouvre une partie inférieure du poteau 2, une douille de guidage de poteau 4 (représentée isolément sur les figures 12 à 14) implantée dans le sol S, destinée à recevoir la base du poteau 2 recouverte de son fourreau de protection 3, et un joint annulaire 5 (représenté isolément sur les figures 9 à 11) destiné à réaliser une étanchéité entre la partie supérieure du fourreau de protection 3 et le poteau 2.

Le poteau 2 est ici réalisé en métal, par exemple en acier galvanisé ou en acier peint. En variante, il peut être réalisé en bois.

Le poteau 2 présente une forme générale allongée tubulaire, ici de section circulaire constante, et comprend un axe longitudinal de poteau L1 ; il est délimité par une extrémité inférieure de poteau 21, une extrémité supérieure de poteau 22 et un corps de poteau 23 entre les deux.

Le corps de poteau 23 comprend une surface externe de corps de poteau 231, ici de forme cylindrique.

Il comprend encore :
- une partie inférieure de poteau 232, de longueur A1, qui s'étend à partir de l'extrémité inférieure de poteau 21 et qui est destinée à se situer au-dessous du niveau de la surface Su du sol S, une fois le système de poteau 1 implanté dans le sol S, et
- une partie supérieure de poteau 233, de longueur A2, qui s'étend au-dessus de la partie inférieure de poteau 232 et qui est destinée à se situer au-dessus du niveau de la surface Su du sol S, une fois le système de poteau 1 implanté dans le sol S.

La partie supérieure de poteau 233 comprend un tronçon inférieur 2331, de longueur A3, situé dans le prolongement de la partie inférieure de poteau 232. Une fois le système de poteau 1 implanté dans le sol, ce tronçon inférieur 2331 du poteau 2 est destiné à s'étendre, depuis la surface Su du sol S, sur une hauteur un peu supérieure à l'épaisseur de la couche de litière.

La longueur du poteau 2 (A1+A2) peut être comprise entre 1,5m et 2,6m ; et son diamètre externe D1 peut être compris entre 60mm et 180mm.

La longueur A1 de la partie inférieure de poteau 232 (destinée à être implantée dans le sol) peut être de l'ordre de 400mm à 500mm. Et la longueur A3 du tronçon inférieur 2331 destinée à s'étendre au-dessus de la surface Su du sol S (en regard de l'épaisseur de la litière) peut être de l'ordre de 300mm à 500mm.

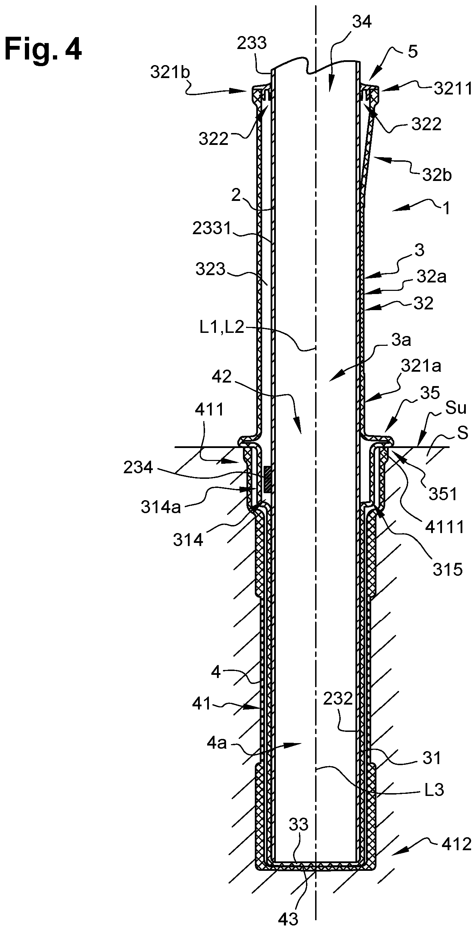

Comme on peut le voir sur la figure 1 et sur la figure 4, la partie inférieure de poteau 232 comprend un ergot anti-rotation 234 qui s'étend en saillie de la surface externe de corps de poteau 231, dont la fonction est expliquée plus loin dans la description.

L'ergot anti-rotation 234 consiste en un pion rapporté et fixé sur le corps de poteau 23 par tout moyen approprié. Par exemple, pour un poteau 2 métallique, l'ergot anti-rotation 234 peut consister en un pion métallique rapporté, fixé par soudage.

De préférence cet ergot anti-rotation 234 est positionné dans une zone supérieure de la partie inférieure de poteau 232, c'est-à-dire dans une zone destinée à se situer légèrement sous la surface Su du sol S, une fois le système de poteau 1 implanté dans le sol.

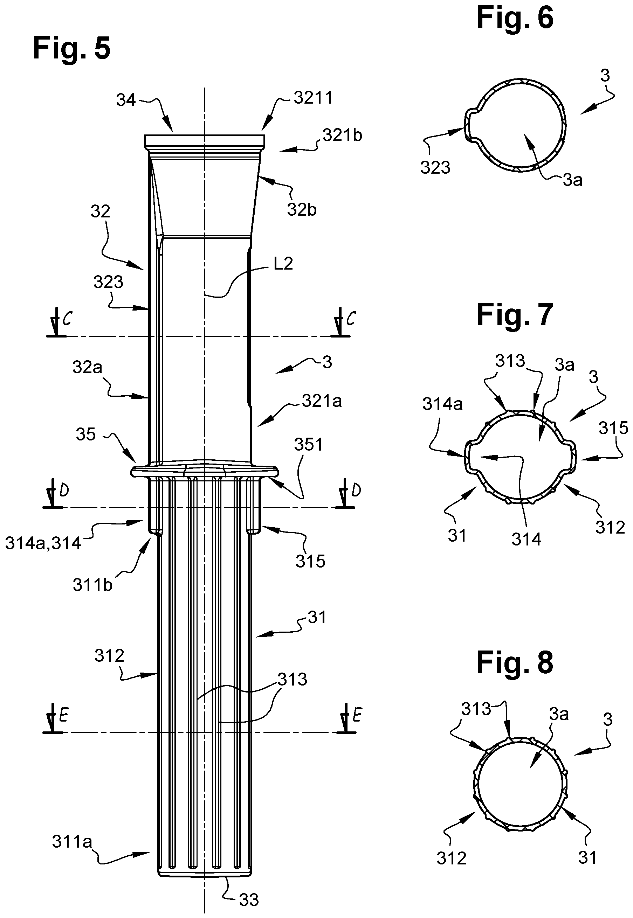

Le fourreau de protection 3 qui recouvre une partie du corps de poteau 23 depuis l'extrémité inférieure de poteau 21 est représenté isolément sur les figures 5 à 8.

Ce fourreau de protection 3 se présente sous la forme générale d'un tube fermé à l'une de ses extrémités et qui délimite un logement interne de fourreau 3a centré sur un axe longitudinal de fourreau L2.

Ce fourreau de protection 3 comprend : - une partie inférieure de fourreau 31 destinée à recouvrir la partie inférieure de poteau 232, et - une partie supérieure de fourreau 32 destinée à recouvrir le tronçon inférieur 2331 de la partie supérieure de poteau 233.

La partie inférieure de fourreau 31 comprend une extrémité inférieure 311a et une extrémité supérieure 311b. La partie supérieure de fourreau 32 comprend une extrémité inférieure 321a et une extrémité supérieure 321b.

A l'opposé de la partie supérieure de fourreau 32, l'extrémité inférieure 311a de la partie inférieure de fourreau 31 est fermée de manière étanche par un fond de fourreau 33.
Et à l'opposé de la partie inférieure de fourreau 31, l'extrémité supérieure 321b de la partie supérieure de fourreau 32 est munie d'une ouverture formant embouchure de fourreau 34.

La section intérieure de la partie inférieure de fourreau 31 correspond, éventuellement au jeu près, à la section extérieure de la partie inférieure de poteau 232.
Ainsi, le diamètre interne de la partie inférieure de fourreau 31 correspond, éventuellement au jeu près, au diamètre externe D1 du poteau 2.

De la même manière, la section intérieure du tronçon inférieur 32a de la partie supérieure de fourreau 32 correspond, éventuellement au jeu près, à la section extérieure du tronçon inférieur 2331 de la partie supérieure de poteau 233.
Ainsi, le diamètre interne du tronçon inférieur 32a de la partie supérieure de fourreau 32 correspond également, éventuellement au jeu près, au diamètre externe D1 du poteau 2.

Comme on peut le voir sur les figures 1 à 5 le tronçon supérieur 32b de la partie supérieure de fourreau 32 s'évase jusqu'à l'extrémité supérieure 321b de cette partie supérieure de fourreau 32, de sorte que l'embouchure de fourreau 34 présente un diamètre supérieur au diamètre externe D1 du poteau 2. Ce diamètre de l'embouchure de fourreau 34, supérieur au diamètre externe D1 du poteau 2 permet la création d'un espace annulaire 322 entre l'extrémité supérieure 321b du fourreau de protection 3 et la partie de poteau 2 en regard, adaptée pour le positionnement du joint annulaire 5 d'étanchéité. La largeur de cet espace annulaire 322 peut être de l'ordre de 1 à 3 cm par exemple.

La partie évasée du tronçon supérieur 32b de la partie supérieure de fourreau 32 peut s'étendre sur le tiers de la hauteur de la partie supérieure de fourreau 32. Cet évasement est de préférence régulier sur toute sa hauteur.

La section intérieure de la partie inférieure de fourreau 31 et la section intérieure du tronçon inférieur 32a de la partie supérieure de fourreau 32 peuvent être prévues pour venir en contact serré, sans jeu, contre la surface externe 231 du corps de poteau 23 ; ces sections peuvent également être prévues pour conserver un jeu fonctionnel entre le poteau 2 et son fourreau de protection 3, en particulier pour tenir compte des tolérances de fabrication des deux éléments.

Par conséquent, le poteau 2 peut être associé à son fourreau de protection 3 par introduction à force, ou non à force. De préférence, comme on peut le voir sur la figure 4, l'extrémité inférieure de poteau 21 vient en butée contre le fond de fourreau 33.

Le fourreau de protection 3 comprend encore une collerette circulaire 35, qui s'étend en saillie vers l'extérieur autour de la zone de jonction entre la partie inférieure de fourreau 31 et la partie supérieure de fourreau 32.

Cette collerette circulaire 35 est réalisée monobloc avec la partie inférieure de fourreau 31 et la partie supérieure de fourreau 32. Elle comprend une face annulaire d'appui 351, qui est orientée vers l'extrémité inférieure 311a de la partie inférieure de fourreau 31, et qui s'étend perpendiculairement à l'axe longitudinal de fourreau L2.

La face annulaire d'appui 351 de la collerette circulaire 35 peut venir recouvrir l'espace annulaire entre la douille de guidage de poteau 4 et la partie inférieure de fourreau 31, en particulier pour limiter les possibilités de souillure du volume interne de la douille de guidage de poteau 4.
Dans le cadre d'une mise en œuvre sans douille de guidage de poteau 4, la face annulaire d'appui 351 de la collerette circulaire 35 peut servir de repère du niveau de scellement et constitue une assise de positionnement à la surface du sol.

Les différentes parties constitutives du fourreau de protection 3 (partie supérieure 32, partie inférieure 31, collerette circulaire 35 et fond de fourreau 33) sont réalisées d'un seul tenant par moulage d'une matière plastique telle que le polyéthylène. Par exemple, le fourreau de protection 3 peut être obtenu par une technique de roto-moulage en association avec une opération de découpe au niveau de l'extrémité supérieure 321 pour réaliser l'ouverture formant l'embouchure de fourreau 34.
En variante, il peut être réalisé par une technique de moulage injection.

Comme on peut le voir sur les figures 1 et 5, la surface externe 312 de la partie inférieure de fourreau 31 comprend des nervures 313 en saillie qui s'étendent parallèlement entre elles et parallèlement à l'axe longitudinal de fourreau L2.

Les nervures 313 s'étendent depuis le fond de fourreau 33, ou pratiquement depuis le fond de fourreau 33, jusqu'à la collerette circulaire 35 ou pratiquement jusqu'à la collerette circulaire 35.

Ces nervures 313 permettent de renforcer la structure du fourreau de protection 3.
Elles peuvent servir d'organes d'ajustement par rabotage/rognage de leurs bordures d'extrémités pour pénétrer dans la douille de guidage de poteau 4 associée.
Dans le cadre d'une mise en œuvre sans douille de guidage de poteau 4, elles permettent d'améliorer la fonction anti-rotation du fourreau de protection 3.

Le joint annulaire 5 adapté pour réaliser l'étanchéité entre l'extrémité supérieure 321b du fourreau de protection 3 et le poteau 2 est illustré isolément sur les figures 9 à 11.

Ce joint annulaire 5 comprend - un corps de joint 51 tubulaire adapté pour venir se positionner dans l'espace annulaire 322 entre le fourreau de protection 3 et la surface externe de corps de poteau 231, et - une extension supérieure annulaire 52 comprenant un épaulement 521 destiné à venir prendre appui contre une bordure d'extrémité supérieure 3211 de l'extrémité supérieure 321b du fourreau de protection 3.
Cette bordure d'extrémité supérieure 3211 du fourreau de protection 3 est ici en forme de bourrelet ou de cordon périphérique dont l'épaisseur est plus importante que le reste de la paroi du fourreau de protection 3 pour améliorer la rigidité de la structure et aussi pour améliorer le maintien du joint annulaire 5.

Le joint annulaire 5 est réalisé en matériau souple ou semi-rigide, par exemple en caoutchouc ou EPDM (Ethylène-Propylène-Diène Monomère).

La surface tubulaire externe du corps de joint 51 comprend des lèvres souples annulaires 511 destinées à venir en contact avec la surface interne de l'extrémité supérieure 321b du fourreau de protection 3 pour optimiser l'étanchéité.

Le corps de joint 51 comprend encore un évidement tubulaire 512 qui débouche à l'opposé de l'extension supérieure annulaire 52. Cet évidement tubulaire 512 permet au joint annulaire 51 de se déformer pour suivre les dilatations du fourreau de protection 3. Il permet également d'absorber les écrasements susceptibles d'être causés par les animaux.

La bordure annulaire intérieure de l'extension supérieure annulaire 52 comprend une lèvre périphérique 522 destinée à venir en contact avec la surface externe de corps de poteau 231 pour améliorer l'étanchéité.

Le système de poteau 1 comprend encore des moyens anti-rotation pour empêcher la rotation du poteau 2 par rapport au fourreau de protection 3.

Ces moyens anti-rotation comprennent l'ergot anti-rotation 234 décrit ci-dessus, ménagé sur le corps de poteau 23 du poteau 2, qui coopère avec un logement d'accueil 314 ménagé au niveau de l'extrémité supérieure 311b de la partie inférieure de fourreau 31, juste sous la collerette circulaire 35.

Pour permettre à l'ergot anti-rotation 234 de venir se loger dans son logement d'accueil 314, le fourreau de protection 3 comprend encore une gorge longitudinale 323 ménagée entre ledit logement d'accueil 314 et l'embouchure de fourreau 34. Cette gorge longitudinale 323 s'ouvre dans le logement interne de fourreau 3a ; elle forme une excroissance, vu de l'extérieur, depuis le tronçon supérieur 32b évasé de la partie supérieure de fourreau 32, jusqu'à la collerette circulaire 35.

La gorge longitudinale 323 s'étend donc depuis l'embouchure de fourreau 34 jusqu'en dessous de la collerette circulaire 35 où elle débouche dans le logement d'accueil 314 ; et elle est adaptée au passage de l'ergot anti-rotation 234.

Le logement d'accueil 314 forme un bossage ou une excroissance 314a, vu de l'extérieur, sous la collerette circulaire 35.

La gorge longitudinale 323 et le logement d'accueil 314 sont prévus avec un léger jeu fonctionnel pour tenir compte des tolérances de fabrication du poteau 2 et du fourreau de protection 3.

Sur les figures 1, 4, 5 et 7 on remarque que le fourreau de protection 3 comprend un second bossage 315, identique au bossage 314a lié à la présence du logement d'accueil 314 de l'ergot anti-rotation 234, disposé sous la collerette circulaire 35.
Les deux bossages 314a et 315 sont diamétralement opposés sur le pourtour du fourreau de protection 3.

La douille de guidage de poteau 4, représentée isolément sur les figures 12 à 14, comprend un corps de douille 41 dont une extrémité supérieure de douille 411 est munie d'une ouverture formant embouchure de douille 42 et dont une extrémité inférieure de douille 412 est fermée par un fond de douille 43.

Le corps de douille 41 est de forme générale tubulaire, ici cylindrique comprenant un axe longitudinal de douille L3.
L'extrémité supérieure de douille 411 est bordée par un bourrelet 4111 améliorant la rigidité et qui délimite l'embouchure de douille 42.

Les différentes parties constitutives de la douille de guidage de poteau 4 (corps de douille 41 et fond de douille 43) sont réalisées d'un seul tenant par moulage d'une matière plastique telle que le polyéthylène. Par exemple, la douille de guidage de poteau 4 peut être obtenue par une technique de roto-moulage en association avec une opération de découpe au niveau de l'extrémité supérieure de douille 411 pour réaliser l'ouverture formant l'embouchure de douille 42.
En variante, elle peut être réalisée par une technique de moulage injection.

Le fond de douille 43 monobloc ferme l'extrémité inférieure de douille 412 de manière étanche.

Le corps de douille 41 et le fond de douille 43 délimitent un logement interne de douille 4a qui débouche par l'embouchure de douille 42.

La section intérieure de la douille de guidage de poteau 4 correspond, au jeu près, à la section extérieure de la partie inférieure de fourreau 31. En l'occurrence, le diamètre du logement cylindrique interne 4a de la douille de guidage de poteau 4 correspond, au jeu près, au diamètre extérieur de la partie inférieure de fourreau 31 (c'est-à-dire au diamètre du cylindre virtuel défini par les bordures d'extrémité des nervures 313).

D'autre part, la hauteur B1 de la douille de guidage de poteau 4 correspond au moins approximativement à la hauteur de la partie inférieure de fourreau 31. Les deux pièces 3 et 4 sont de préférence dimensionnées de sorte que, lorsque le fond de fourreau 33 entre en contact avec le fond de douille 43, l'extrémité supérieure de douille 411 de la douille de guidage de poteau 4 vienne affleurer la face annulaire d'appui 351 de la collerette circulaire 35 du fourreau de protection 3.

Comme précisé ci-dessus, la douille de guidage de poteau 4 est destinée à être implantée dans le sol S, avec l'embouchure de douille 42 affleurant la surface de sol Su ; et la douille de guidage de poteau 4 est destinée à recevoir la partie inférieure de poteau 232 recouverte de la partie inférieure de fourreau 31.

La surface externe 413 du corps de douille 41 comprend des nervures en saillie 414, 415, en particulier pour augmenter la rigidité et aussi pour limiter les possibilités de rotation et d'extraction, une fois la douille de guidage de poteau 4 implantée dans le sol. Pour cela, de préférence, certaines des nervures 414 s'étendent parallèlement à l'axe longitudinal de douille L3, et d'autres nervures 415 s'étendent perpendiculairement audit axe longitudinal de douille L3.

Le système de poteau 1 comprend avantageusement des moyens anti-rotation pour empêcher la rotation du fourreau de protection 3 par rapport à la douille de guidage de poteau 4.

Ces moyens anti-rotation sont constitués par les bossages 314a et 315 précités, ménagés au niveau de l'extrémité supérieure 311b de la partie inférieure de fourreau 31, qui coopèrent chacun avec une réservation anti-rotation 416 complémentaire ménagée au niveau de l'extrémité supérieure de douille 411.

Dans le mode de réalisation illustré l'extrémité supérieure de douille 411 comprend quatre réservations anti-rotation 416 espacées de 90°.
Les quatre réservations anti-rotation 416 reçoivent deux à deux les deux bossages 314a, 315 du fourreau de protection 3, selon l'orientation que l'on souhaite donner au poteau 2, dans le cas où ce dernier comprend des organes directionnels soudés, pour la fixation des barrières.

Dans une variante de réalisation l'extrémité supérieure 311b de la partie inférieure de fourreau 31 peut comporter quatre bossages anti-rotation espacés de 90°.

Une possibilité de mise en œuvre du système de poteau 1 selon l'invention consiste à implanter la douille de guidage de poteau 4 dans le sol S (par exemple un sol en béton), avec son axe longitudinal de douille L3 disposé verticalement et avec son embouchure de douille 42 qui affleure la surface de sol Su.

De son côté, le poteau 2 est emboité dans le fourreau de protection 3 jusqu'à ce que son extrémité inférieure 21 vienne en contact avec le fond de fourreau 33. Au cours de cet emboitement l'ergot anti-rotation 234 du poteau 2 s'engage dans la partie supérieure de la gorge longitudinale 323 et transite sur toute la longueur de cette gorge longitudinale 323 jusqu'à ce qu'il atteigne son logement d'accueil 314.

La partie inférieure de fourreau 31 recouvre alors la partie inférieure de poteau 232 et la partie supérieure de fourreau 32 recouvre le tronçon inférieur 2331 de la partie supérieure de poteau 233, cela de manière complète et étanche, excepté au niveau de l'espace annulaire 322 de l'embouchure de fourreau 34.

Une fois le poteau 2 convenablement emboité dans son fourreau de protection 3, l'espace annulaire 322 entre le fourreau de protection 3 et le poteau 2 peut être comblé par le joint annulaire 5, avec son épaulement 521 en appui contre la bordure d'extrémité supérieure 3211 du fourreau de protection 3, pour réaliser l'étanchéité ou la quasi étanchéité à ce niveau.

L'extrémité inférieure du poteau 2 protégée par le fourreau de protection 3 peut alors être engagée/emboitée dans le logement interne de douille 4a de la douille de guidage de poteau 4, par l'embouchure de douille 42, jusqu'à ce que le fond de fourreau 33 vienne en contact avec le fond de douille 43 (et que la face annulaire d'appui 351 de la collerette circulaire 35 vienne affleurer le bourrelet 4111 de l'extrémité supérieure de douille 411). Au cours de cet emboitement, les bossages 314a et 315 du fourreau de protection 3 viennent se loger dans les réservations anti-rotation 416 en regard, pour remplir la fonction anti-rotation recherchée du poteau 2.

Le contact ou quasi contact entre la collerette circulaire 35 et le bourrelet 4111 de l'extrémité supérieure de douille 411 limite les possibilités d'accès de la paille, et aussi des liquides et souillures, dans le logement interne de douille 4a, entre la partie inférieure de fourreau 31 et la douille de guidage de poteau 4.

On protège ainsi la partie inférieure du poteau 2 dans le sol et sur une hauteur légèrement supérieure à l'épaisseur de la litière.

Une telle protection de poteau est particulièrement efficace à l'encontre des agressions liées à l'humidité, aux produits générés par l'exploitation tels que les fumiers et lisiers, et également aux phénomènes d'électrolyses (pour les poteaux métalliques).

Les figures 1 à 14 illustrent un système de poteau 1 comprenant un poteau 2 de section circulaire, associé à un fourreau de protection 3 et à une douille de guidage de poteau 4 également de section circulaire.
Et du fait de ces section circulaires, le système de poteau 1 comprend des moyens anti-rotation 234, 314, 416 pour empêcher la rotation du poteau 2 autour de son axe longitudinal de poteau L1.

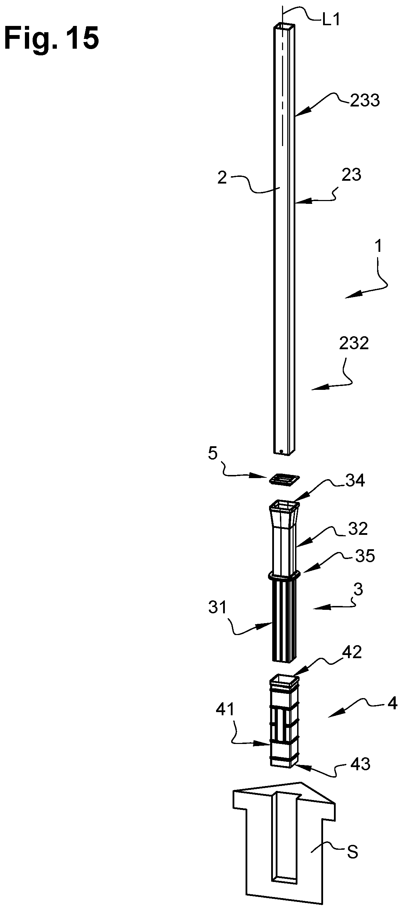

Dans une variante de réalisation illustrée sur la figure 15, le système de poteau 1 comprend un poteau 2 de section carrée, associé à un fourreau de protection 3 et à une douille de guidage de poteau 4 également de section carrée.
La forme générale du joint annulaire 5 est alors adaptée à la forme polygonale de l'espace annulaire 322 entre le fourreau de protection 3 et le poteau 2.

Ici, les sections carrées empêchent la rotation du poteau autour de son axe longitudinal de poteau L1, et l'ensemble de poteau 1 correspondant ne nécessite pas d'autres moyens anti-rotation.

Dans une variante de réalisation, le système de poteau peut comprendre un poteau 2 (de section circulaire ou carrée) associé uniquement à un fourreau de protection 3, sans douille de guidage de poteau 4.
Dans un tel système de poteau, la partie inférieure de fourreau 31 est directement implantée dans le sol S, avec la face annulaire d'appui 351 de la collerette circulaire 35 en contact avec la surface de sol Su. Le fourreau de protection 3 ne comporte alors pas de caractère amovible et ses nervures 313, ainsi que ses bossages 314a, 315, constituent des moyens anti-rotation par rapport au sol S.

Encore à titre de variante de réalisation, selon les besoins, des versions sans joint annulaire 5 et/ou sans collerette circulaire 35 peut être envisagées.

## Revendications

1. Système de poteau (1) destiné à être installé dans un sol (S), lequel système de poteau (1) comprend :
- un poteau (2) de forme générale allongée, délimité par une extrémité inférieure de poteau (21), une extrémité supérieure de poteau (22) et un corps de poteau (23) entre les deux, lequel corps de poteau (23) comprend une partie inférieure de poteau (232) destinée à se situer au-dessous du niveau de la surface (Su) du sol (S), une partie supérieure de poteau (233) destinée à se situer au-dessus du niveau de la surface (Su) dudit sol (S), une surface externe de corps de poteau (231), et
- un fourreau de protection (3) qui recouvre une partie dudit corps de poteau (23) depuis ladite extrémité inférieure de poteau (21), lequel fourreau de protection (3) comprend un axe longitudinal de fourreau (L2) et une extrémité (321b) munie d'une ouverture formant embouchure de fourreau (34),
ledit fourreau de protection (3) étant réalisé monobloc en matière plastique et comprenant :
- une partie inférieure de fourreau (31) qui recouvre ladite partie inférieure de poteau (232),
- une partie supérieure de fourreau (32) qui recouvre un tronçon inférieur (2331) de ladite partie supérieure de poteau (233), le système de poteau étant **caractérise par le fait que** le fourreau de protection comprend aussi un fond de fourreau (33) qui ferme de manière étanche ladite partie inférieure de fourreau (31) du côté de ladite extrémité inférieure de poteau (21).

2. Système de poteau (1) selon la revendication 1, **caractérisé en ce que** ledit fourreau de protection (3) comprend une collerette circulaire (35) monobloc, qui s'étend en saillie autour de la zone de jonction entre la partie inférieure de fourreau (31) et la partie supérieure de fourreau (32), laquelle collerette circulaire (35) comprend une face annulaire d'appui (351) qui s'étend perpendiculairement audit axe longitudinal de fourreau (L2).

3. Système de poteau (1) selon l'une quelconque des revendications 1 ou 2, **caractérisé en ce qu'**il comprend un espace annulaire (322) entre ledit fourreau de protection (3) et ladite surface externe de corps de poteau (231), au niveau de ladite embouchure de fourreau (34), et **en ce qu'**il comprend un joint annulaire (5) rapporté, réalisé en un matériau souple ou semi-rigide, inséré dans ledit espace annulaire (322).

4. Système de poteau (1) selon la revendication 3, **caractérisé en ce que** ledit joint annulaire (5) comprend un corps de joint (51) tubulaire adapté pour venir se positionner dans ledit espace annulaire (322) entre ledit fourreau de protection (3) et ladite surface externe de corps de poteau (231), et une extension supérieure annulaire (52) comprenant un épaulement (521) destiné à venir prendre appui contre une bordure d'extrémité supérieure (3211) dudit fourreau de protection (3).

5. Système de poteau (1) selon l'une quelconque des revendications 3 ou 4, **caractérisé en ce que** ladite partie inférieure de fourreau (31) et un tronçon inférieur (32a) de ladite partie supérieure de fourreau (32) comprennent une face intérieure en contact avec la surface externe de corps de poteau (231), ou espacée de la surface externe de corps de poteau (231) par un simple jeu fonctionnel, et **en ce que** ladite partie supérieure de fourreau (32) comprend un tronçon supérieur (32b) évasé pour former ledit espace annulaire (322) de réception dudit joint annulaire (5).

6. Système de poteau (1) selon l'une quelconque des revendications 1 à 5, **caractérisé en ce que** la surface externe (312) de la partie inférieure de fourreau (31) comprend des nervures (313) en saillie qui s'étendent parallèlement à l'axe longitudinal de fourreau (L2).

7. Système de poteau (1) selon l'une quelconque des revendications 1 à 6, **caractérisé en ce que** ledit poteau (2) est de section circulaire,
et **en ce que** ledit système de poteau (1) comprend des moyens anti-rotation pour empêcher la rotation du poteau (2) par rapport audit fourreau de protection (3), lesquels moyens anti-rotation comprennent un ergot anti-rotation (234) en saillie ménagé sur ledit corps de poteau (23), coopérant avec un logement d'accueil (314) ménagé au niveau de l'extrémité supérieure (311b) de ladite partie inférieure de fourreau (31), lequel fourreau de protection (3) comprend encore une gorge longitudinale (323) ménagée entre ledit logement d'accueil (314) et ladite embouchure de fourreau (34) adaptée au passage dudit ergot anti-rotation (234).

8. Système de poteau (1) selon l'une quelconque des revendications 1 à 7, **caractérisé en ce qu'**il comprend une douille de guidage de poteau (4) de forme générale tubulaire comprenant un axe longitudinal de douille (L3) et un corps de douille (41) dont une extrémité supérieure de douille (411) est munie d'une ouverture formant embouchure de douille (42), et dont une extrémité inférieure de douille (412) comprend un fond de douille (43) monobloc qui ferme ladite extrémité inférieure de douille (412) de manière étanche,
laquelle douille de guidage de poteau (4) est destinée à être implantée dans ledit sol (S), avec ladite embouchure de douille (42) affleurant ladite surface (Su) de sol (S),
et laquelle douille de guidage de poteau (4) est destinée à recevoir l'extrémité inférieure de poteau (21) recouverte de ladite partie inférieure de fourreau (31), la section intérieure de ladite douille de guidage de poteau (4) correspondant, au jeu près, à la section extérieure de ladite partie inférieure de fourreau (31).

9. Système de poteau (1) selon la revendication 8, **caractérisé en ce que** la surface externe (413) du corps de douille (41) comprend des nervures en saillie (414, 415) dont certaines s'étendent parallèlement audit axe longitudinal de douille (L3), et dont certaines s'étendent perpendiculairement audit axe longitudinal de douille (L3).

10. Système de poteau (1) selon la revendication 8 prise sous la dépendance de la revendication 7, **caractérisé en ce qu'**il comprend des moyens anti-rotation (314a, 315, 416) pour empêcher la rotation du fourreau de protection (3) par rapport à la douille de guidage de poteau (4).

11. Système de poteau (1) selon la revendication 10, **caractérisé en ce que** lesdits moyens anti-rotation pour empêcher la rotation du fourreau de protection (3) par rapport à la douille de guidage de poteau (4) consistent en au moins un bossage anti-rotation (314a, 315) ménagé au niveau de l'extrémité supérieure (311b) de la partie inférieure de fourreau (31), adapté pour coopérer avec une réservation anti-rotation (416) complémentaire ménagée au niveau de ladite extrémité supérieure de douille (411).

12. Système de poteau (1) selon la revendication 11, **caractérisé en ce qu'**il comprend quatre bossages anti-rotation (314a, 315) espacés de 90° sur le pourtour dudit fourreau de protection (3) et/ou quatre réservations anti-rotation (416) espacées de 90° sur le pourtour de ladite douille de guidage de poteau (4).

13. Système de poteau (1) selon l'une quelconque des revendications 11 ou 12, **caractérisé en ce que** le ou l'un desdits bossages anti-rotation (314a) constitue le logement d'accueil (314) de l'ergot anti-rotation (234) du poteau (2).

## Patentansprüche

1. Pfahlsystem (1), das dazu bestimmt ist, in einem Boden (S) installiert zu werden, wobei das Pfahlsystem (1):
- einen Pfosten (2) von allgemeiner länglicher Form, der von einem unteren Pfahlende (21), einem oberen Pfahlende (22) und einem zwischen beiden liegenden Pfahlkörper (23) begrenzt ist, wobei der Pfahlkörper (23) einen unteren Pfahlteil (232), der dazu bestimmt ist, sich unterhalb der Ebene der Oberfläche (Su) des Bodens (S) zu befinden, einen oberen Pfahlteil (233), der dazu bestimmt ist, sich oberhalb der Oberfläche (Su) des Bodens (S) zu befinden, eine äußere Pfahlkörperoberfläche (231) aufweist, und
- eine Schutzhülle (3), die einen Teil des Pfahlkörpers (23) vom unteren Pfahlende (21) her bedeckt, wobei die Schutzhülle (3) eine Hüllenlängsachse (L2) und ein mit einer eine Hüllenmündung bildenden Öffnung versehenes Ende (321b) aufweist,
aufweist,
wobei die Schutzhülle (3) einstückig aus einem Plastikmaterial hergestellt ist und
- einen unteren Schutzhüllenteil (31), der den unteren Pfahlteil (232) bedeckt,
- einen oberen Schutzhüllenteil (32), der einen unteren Abschnitt (2331) des oberen Pfahlteils (233) bedeckt,
aufweist,
wobei das Pfahlsystem **dadurch gekennzeichnet ist, daß** die Schutzhülle außerdem einen Hüllenboden (33) aufweist, der den unteren Hüllenteil (31) auf der Seite des unteren Pfahlendes (21) dicht abschließt.

2. Pfahlsystem (1) gemäß Anspruch 1, **dadurch gekennzeichnet, daß** die Schutzhülle (3) einen einstückigen runden Kragen (35) aufweist, der sich hervorstehend um die Verbindungszone zwischen dem unteren Pfahlteil (31) und dem oberen Pfahlteil (32) erstreckt, wobei der runde Kragen (35) eine ringförmige Auflageseite (351) aufweist, die sich senkrecht zur Hüllenlängsachse (L2) erstreckt.

3. Pfahlsystem (1) gemäß einem der Ansprüche 1 oder 2, **dadurch gekennzeichnet, daß** es zwischen der Schutzhülle (3) und der äußeren Pfahlkörperoberfläche (231) auf der Höhe der Hüllenmündung (34) einen ringförmigen Raum (322) aufweist und daß es eine zugefügte ringförmige, aus einem weichen oder halbfesten Material hergestellte Dichtung (5) aufweist, die in den ringförmigen Raum (322) eingesetzt ist.

4. Pfahlsystem (1) gemäß Anspruch 3, **dadurch gekennzeichnet, daß** die ringförmige Dichtung (5) einen rohrförmigen Dichtungskörper (51), der dazu ausgelegt ist, sich im ringförmigen Raum (322) zwischen der Schutzhülle (3) und der äußeren Pfahlkörperoberfläche (231) zu positionieren, und eine obere ringförmige Erweiterung (52) mit einer Schulter (521), die dazu bestimmt ist, an einem Rand des oberen Endes (3211) der Schutzhülle (3) anzuliegen, aufweist.

5. Pfahlsystem (1) gemäß einem der Ansprüche 3 oder 4, **dadurch gekennzeichnet, daß** der untere Hüllenteil (31) und ein unterer Abschnitt (32a) des oberen Hüllenteils (32) eine Innenseite aufweisen, die mit der äußeren Pfahlkörperoberfläche (231) in Kontakt sind oder von der äußeren Pfahlkörperoberfläche durch ein einfaches funktionelles Spiel beabstandet ist, und daß der obere Hüllenteil (32) einen erweiterten oberen Abschnitt (32b) aufweist, um den ringförmigen Raum (322) für die Aufnahme der ringförmigen Dichtung (5) zu bilden.

6. Pfahlsystem (1) gemäß einem der Ansprüche 1 bis 5, **dadurch gekennzeichnet, daß** die äußere Oberfläche (312) des unteren Hüllenteils (31) hervorstehende Rippen aufweist, die sich parallel zur Hüllenlängsachse (L2) erstrecken.

7. Pfahlsystem (1) gemäß einem der Ansprüche 1 bis 6, **dadurch gekennzeichnet, daß** der Pfahl (2) einen ringförmigen Querschnitt hat
und daß das Pfahlsystem (1) Drehverhinderungsmittel aufweist, um die Drehung des Pfahls (2) gegenüber der Schutzhülle (3) zu verhindern, wobei die Drehverhinderungsmittel eine auf dem Pfahlkörper (23) eingerichtete hervorstehende Drehverhinderungsnase (234) aufweisen, die mit einer auf Höhe des oberen Endes (311b) des unteren Hüllenteils (31) gebildeten Aufnahme (314) zusammenwirken, wobei die Schutzhülle (3) außerdem eine Längsrinne (323) aufweist, die zwischen der Aufnahme (314) und der Hüllenmündung (34) eingerichtet ist und zum Hindurchführen der Drehverhinderungsnase (234) angepaßt ist.

8. Pfahlsystem (1) gemäß einem der Ansprüche 1 bis 7, **dadurch gekennzeichnet, daß** es eine im Wesentlichen rohrförmige, eine Hülsenlängsachse (L3) aufweisende Pfahlführungshülse (4) und einen Hülsenkörper (41) aufweist, von der ein oberes Hülsenende (411) mit einer eine Hülsenmündung (42) bildenden Öffnung versehen ist und von der ein unteres Hülsenende (412) einen einstückigen Hülsenboden (43) aufweist, der das untere Hülsenende (412) dicht abschließt,
wobei die Pfahlführungshülse (4) dazu bestimmt ist, im Boden (S) so eingesetzt zu werden, daß die Hülsenmündung (42) mit der Oberfläche (Su) des Bodens (S) abschließt,
und wobei die Pfahlführungshülse (4) dazu bestimmt ist, das mit dem unteren Hüllenteil (31) bedeckte untere Pfahlende (21) aufzunehmen, wobei der innere Querschnitt der Pfahlführungshülse (4) bis auf ein Spiel dem äußeren Querschnitt des unteren Hüllenteils (31) entspricht.

9. Pfahlsystem (1) gemäß Anspruch 8, **dadurch gekennzeichnet, daß** die äußere Oberfläche (413) des Hülsenkörpers (41) hervorstehende Rippen (414, 415) aufweist, von denen sich einige parallel zur Hülsenlängsachse (L3) erstrecken und von denen sich einige senkrecht zur Hülsenlängsachse (L3) erstrecken.

10. Pfahlsystem (1) gemäß Anspruch 8 in Abhängigkeit von Anspruch 7, **dadurch gekennzeichnet, daß** es Drehverhinderungsmittel (314a, 315, 416) aufweist, um das Drehen der Schutzhülle (3) gegenüber der Pfahlführungshülse (4) zu verhindern.

11. Pfahlsystem (1) gemäß Anspruch 10, **dadurch gekennzeichnet, daß** die Drehverhinderungsmittel zum Verhindern des Drehens der Schutzhülle (3) gegenüber der Pfahlführungshülse (4) aus mindestens einer in Höhe des oberen Endes (311b) des unteren Hüllenteils (31) eingerichteten Drehverhinderungsbeule (314a, 315) bestehen, die dazu ausgelegt sind, mit einer komplementären, in Höhe des oberen Hülsenendes (411) eingerichteten Drehverhinderungsaussparung (416) zusammenzuwirken.

12. Pfahlsystem (1) gemäß Anspruch 11, **dadurch gekennzeichnet, daß** es am Umfang der Schutzhülle (3) vier um 90° versetzte Drehverhinderungsbeulen (314a, 315) und/oder am Umfang der Pfahlführungshülse (4) vier um 90° versetzte Drehverhinderungsaussparungen (416) aufweist.

13. Pfahlsystem (1) gemäß einem der Ansprüche 11 oder 12, **dadurch gekennzeichnet, daß** die oder eine der Drehverhinderungsbeulen (314a) die Aufnahme (314) der Drehverhinderungsnase (234) des Pfahls (2) bildet.

## Claims

1. A post system (1) intended to be installed in a soil (S), wherein said post system (1) comprises:
- a post (2) of generally elongated shape, delimited by a lower post end (21), an upper post end (22) and a post body (23) between both, said post body (23) comprising a lower post portion (232) intended to be located under the level of the surface (Su) of the soil (S), an upper post portion (233) intended to be located above the level of the surface (Su) of said soil (S), an external surface of the post body (231), and
- a protective sleeve (3) that covers part of said post body (23) from said lower post end (21), said protective sleeve (3) comprises a longitudinal sleeve axis (L2) and an end (321b) provided with an opening forming the sleeve mouth (34),
said protective sleeve (3) being made in one piece from plastic and comprising:
- a lower sleeve portion (31) that covers said lower post portion (232),
- an upper sleeve portion (32) that covers a lower section (2331) of said upper post portion (233), the post system being **characterized in that** the protective sleeve also comprises a sleeve bottom (33) that seals said sleeve lower portion (31) on the side of said lower post end (21).

2. The post system (1) according to claim 1, **characterized in that** said protective sleeve (3) comprises a one-piece circular flange (35), which projects around the junction area between the lower sleeve portion (31) and the upper sleeve portion (32), said circular flange (35) comprising an annular bearing face (351) that extends perpendicular to said longitudinal sleeve axis (L2).

3. The post system (1) according to any one of claims 1 or 2, **characterized in that** it comprises an annular space (322) between said protective sleeve (3) and said outer post body surface (231), at said sleeve mouth (34), and **in that** it comprises an added annular gasket (5), made of a flexible or semi-rigid material, inserted into said annular space (322).

4. The post system (1) according to claim 3, **characterized in that** said annular gasket (5) comprises a tubular gasket body (51) adapted to be positioned inside said annular space (322) between the protective sleeve (3) and said outer post body surface (231), and an upper annular extension (52) comprising a shoulder (521) intended to bear against an upper end border (3211) of said protective sleeve (3).

5. The post system (1) according to any one of claims 3 or 4, **characterized in that** said lower sleeve portion (31) and a lower section (32a) of said upper sleeve portion (32) comprise an inner face in contact with the outer post body surface (231), or spaced apart from the outer post body surface (231) by a simple functional clearance, and **in that** said upper sleeve portion (32) comprises a flared upper section (32b) to form said annular space (322) for receiving said annular gasket (5).

6. The post system (1) according to any one of claims 1 to 5, **characterized in that** the outer surface (312) of the lower sleeve portion (31) comprises projecting ribs (313) that extend parallel to the longitudinal sleeve axis (L2).

7. The post system (1) according to any one of claims 1 to 6, **characterized in that** said post (2) is of circular cross-section, and **in that** said post system (1) comprises anti-rotation means to prevent rotation of the post (2) relative to said protective sleeve (3), said anti-rotation means comprising a projecting anti-rotation lug (234) arranged on said post body (23), cooperating with a receiving housing (314) arranged at the upper end (311b) of said lower sleeve portion (31), said protective sleeve (3) also comprising a longitudinal groove (323) arranged between said receiving housing (314) and said sleeve mouth (34) adapted for the passage of said anti-rotation lug (234).

8. The post system (1) according to any one of claims 1 to 7, **characterized in that** it comprises a post guiding bushing (4) of generally tubular shape comprising a longitudinal bushing axis (L3) and a bushing body (41), an upper bushing end (411) of which is provided with an opening forming the bushing mouth (42), and a lower bushing end (412) of which comprises a one-piece bushing bottom (43) that seals said lower bushing end (412),
said post guiding bushing (4) being intended to be implanted in said soil (S), with said bushing mouth (42) flushing said surface (Su) of the soil (S),
and said post guiding bushing (4) being intended to receive the lower post end (21) covered with said lower post portion (31), the inner cross-section of said post guiding bushing (4) corresponding, to within the clearance, to the outer cross-section of said lower sleeve portion (31).

9. The post system (1) according to claim 8, **characterized in that** the outer surface (413) of the bushing body (41) comprises projecting ribs (414, 415), some of which extend parallel to said longitudinal bushing axis (L3), and some of which extend perpendicular to said longitudinal bushing axis (L3).

10. The post system (1) according to claim 8, when depending on claim 7, **characterized in that** it comprises anti-rotation means (314a, 315, 416) to prevent for the rotation of the protective sleeve (3) with respect to the post guiding bushing (4).

11. The post system (1) according to claim 10, **characterized in that** said anti-rotation means for preventing rotation of the protective sleeve (3) with respect to the post guiding bushing (4) consist of at least one anti-rotation boss (314a, 315) arranged at the upper end (311b) of the lower sleeve portion (31), adapted to cooperate with a complementary anti-rotation reservation (416) arranged at said upper bushing end (411).

12. The post system (1) according to claim 11, **characterized in that** it comprises four anti-rotation bosses (314a, 315) spaced apart from each other by 90° on the perimeter of said protective sleeve (3) and/or four anti-rotation reservations (416), spaced apart from each other by 90° on the perimeter of said post guiding bushing (4).

13. The post system (1) according to any one of claims 11 or 12, **characterized in that** said or one of said anti-rotation bosses (314a) forms the receiving housing (314) for the anti-rotation lug (234) of the post (2).
